# EUROPÄISCHE PATENTSCHRIFT

(11) **EP 3 175 752 B1**
(45) Veröffentlichungstag und Bekanntmachung des Hinweises auf die Patenterteilung: **30.09.2020**
(21) Anmeldenummer: 16206940.5
(22) Anmeldetag: 13.08.2015
(51) Int. Cl.: A47J 43/07

(54) **KÜCHENMASCHINE MIT VERRIEGELUNGSEINRICHTUNG**
KITCHEN APPLIANCE WITH LOCKING DEVICE
ROBOT MÉNAGER ET DISPOSITIF DE VERROUILLAGE

(30) Priorität: 27.08.2014 DE 102014112267
(43) Veröffentlichungstag der Anmeldung: 07.06.2017
(62) Teilanmeldung aus: 15180848.2
(73) Patentinhaber: Vorwerk & Co. Interholding GmbH, 42275 Wuppertal (DE)
(72) Erfinder: Starflinger, Frank, 44793 Bochum (DE)
(74) Vertreter: Müller, Enno

(56) Entgegenhaltungen:
- EP-A1- 2 371 251
- DE-A1-102011 002 321
- DE-A1-102011 052 745
- KR-B1- 100 262 634
- US-A- 5 839 357

## Beschreibung

Die Erfindung betrifft eine Küchenmaschine nach den Merkmalen des Oberbegriffes des Anspruchs 1.

Küchenmaschinen mit Verriegelungseinrichtungen der vorgenannten Art sind im Stand der Technik bekannt. Die Druckschrift EP 2 698 088 A1 offenbart beispielsweise eine elektrisch betriebene Küchenmaschine mit einem Gargefäß und einem Deckel für das Gargefäß, wobei der Deckel gegen das Gargefäß verriegelbar ist, um während der Zubereitung von Speisen innerhalb des Gefäßes ein Herausspritzen von Speiseteilen aus dem Gefäß zu verhindern. Zur Verriegelung des Deckels mit dem Gefäß sind elektromotorisch antreibbare Verriegelungselemente, in Form von Verriegelungswalzen vorgesehen, welche in der Verriegelungsstellung den Deckel in der auf dem Gefäß aufgesetzten Stellung übergreifen.

Aus der Druckschrift EP 2 522 263 A1 ist es weiterhin bekannt, das Verriegelungselement drehfest mit einem Verriegelungshebel zu verbinden, welcher in Wirkverbindung mit einem Aktuator steht. Der Aktuator kann beispielsweise mittels eines Elektromotors angetrieben sein und über ein Verriegelungsgestänge auf den Verriegelungshebel einwirken.

Aus der US 5839357 A ist eine Küchenmaschine mit einem an einem Gehäuse der Küchenmaschine schwenkbar angelenkten Deckel bekannt. Der Deckel ist mit einer Verriegelungseinrichtung versehen, mit welcher im geschlossenen Zustand eine Formschlussverbindung zu einem Topfrand erreichbar ist. Die Formschlusselemente sind linear verfahrbar und mit einem Magneten versehen. Der Magnet ist durch einen in dem Deckel angeordneten Reed-Schalter hinsichtlich seiner Stellung erfassbar.

Aus der DE 10 2011002 321 A1 ist eine Küchenmaschine mit einem Gefäß und einem Deckel bekannt, bei welcher der Deckel zusätzlich zu rotierbaren Verriegelungselementen mittels eines im Griffbereich des Gefäßes vorgesehenen Permanentmagneten, der in eine Formschlussstellung zu einem in das Gefäß ragenden Kragen des Deckels versetzbar ist, verriegelbar ist Der Deckel weist ferromagnetisierbare Teile (umlaufend) auf, die im eingesetzten Zustand des Deckels zu einer entsprechenden Bewegung der permanentmagnetischen Teile führen. Zur Überprüfung des Verriegelungszustandes ist ein den Deckel einbeziehender elektrischer Stromkreis zu schließen.

Ausgehend von einem Stand der Technik gemäß der US 5839357 A beschäftigt sich die Erfindung mit der Aufgabenstellung, eine Küchenmaschine mit einer Verriegelungseinrichtung, die ein Verriegelungselement und einen drehfest verbundenen Verriegelungshebel aufweist, anzugeben, bei welcher in günstiger Weise eine Detektionseinrichtung zur Erfassung der Position des Verriegelungshebels ausgebildet ist.

Diese Aufgabe ist beim Gegenstand des Anspruches 1 gelöst, wobei darauf abgestellt ist, dass die Detektionseinrichtung dem Verriegelungshebel selbst zugeordnet ist, so dass dessen Position unmittelbar detektiert werden kann oder dass an einem von dem Verriegelungselement abgewandten Ende des Verriegelungshebels ein Endbereich eines Verriegelungsgestänges angeordnet ist, welches in Wirkverbindung mit dem Aktuator steht und dass die Detektionseinrichtung dem Verriegelungsgestänge zugeordnet ist, welches derart eingerichtet ist, dass aus der Position des Verriegelungsgestänges ein Rückschluss auf die Position des Verriegelungshebels gezogen werden kann.

Um sicherstellen zu können, dass die Verriegelungseinrichtung, gegebenenfalls auch im Hinblick auf ein Sicherungselement, siehe weiter unten, ordnungsgemäß montiert wurde, ist der Verriegelungseinrichtung die Detektionseinrichtung zugeordnet. Vorteilhaft ist die Detektionseinrichtung dem Verriegelungshebel selbst zugeordnet, so dass dessen Position unmittelbar detektiert werden kann. Alternativ ist die Detektionseinrichtung dem Verriegelungsgestänge zugeordnet welches dabei derart eingerichtet ist, dass aus der Position des Verriegelungsgestänges ein Rückschluss auf die Position des Verriegelungshebels gezogen werden kann. Somit erfolgt die Überprüfung einer ordnungsgemäßen Formschlussstellung zwischen dem Verriegelungselement und dem Verriegelungshebel und/oder der ordnungsgemäßen Montage des Sicherungselementes beispielsweise nicht über eine direkte Abfrage der Anwesenheit oder Abwesenheit des Sicherungselementes an dem Verriegelungselement bzw. dem Verriegelungshebel, sondern indirekt über die Position der Verriegelungseinrichtung bzw. des Verriegelungshebels, welche im Falle der korrekten Montage eine andere ist als im Falle der inkorrekten Montage oder des Fehlens des Sicherungselementes. Dabei nutzt die Erfindung den Zusammenhang, dass der Verriegelungshebel abhängig von dem Montagezustand der Verriegelungseinrichtung unterschiedliche Positionen einnimmt. Es empfiehlt sich dabei, die Position des Verriegelungshebels in Bezug auf die Verriegelungsstellung der Verriegelungseinrichtung zu definieren, so dass die Detektionseinrichtung die aktuelle Position des Verriegelungshebels jeweils in Bezug auf die Verriegelungsstellung misst. Durch die Verriegelungsstellung ist eine Stellung des

Verriegelungselementes und damit auch des Verriegelungshebels definiert, welche durch die Anlage des Verriegelungselementes an dem Gefäß bzw. an dem Deckel gekennzeichnet ist. Mit Hilfe der erfindungsgemäßen Detektionseinrichtung kann nun überprüft werden, ob eine aktuelle Position des Verriegelungshebels in Bezug auf die Verriegelungsstellung derjenigen Position entspricht, welche der Verriegelungshebel bei ordnungsgemäß hergestellter Formschlussstellung und/oder bei korrekter Montage des Sicherungselementes einnimmt.

Die drehfeste Verbindung von Verriegelungselement und Verriegelungshebel ist durch ein gesondert einzusetzendes Sicherungselement gesichert. Entgegen dem Stand der Technik können das Verriegelungselement und der Verriegelungshebel bei eingesetztem Sicherungselement nicht mehr in die Montagestellung versetzt werden, wodurch die drehfeste Verbindung gesichert ist. Das Sicherungselement liegt zudem im Kraftfluss der von dem Aktuator aufgebrachten Verriegelungskraft, so dass das Sicherungselement bei einer Betätigung des Aktuators und somit auch einer Betätigung des Verriegelungshebels gegen das Verriegelungselement festgesetzt wird. Bei einer Betätigung des Aktuators stößt das Sicherungselement an benachbarte Flanken des Verriegelungselementes bzw. des Verriegelungshebels, so dass eine möglichst spielfreie Verbindung von Verriegelungselement und Verriegelungshebel erreichbar ist.

Das Sicherungselement, welches die drehfeste Verbindung zwischen dem Verriegelungselement und dem Verriegelungshebel sichert, eliminiert das Drehwinkelspiel zwischen dem Verriegelungselement und dem Verriegelungshebel, so dass die Genauigkeit der mittels der Detektionseinrichtung durchgeführten Positionsmessung nicht von einer Drehwinkeltoleranz bestimmt wird. Mittels des Sicherungselementes wird das ungewünschte Lösen der Verbindung von Verriegelungselement und Verriegelungshebel allgemein verhindert, wobei jedoch gleichzeitig eine lösbare Verbindung gegeben ist, um im Reparaturfall einen Austausch von Teilen der Verriegelungseinrichtung durchführen zu können.

Es empfiehlt sich, dass die Detektionseinrichtung zumindest teilweise an dem Gehäuse angeordnet ist. Dadurch weist ein Teilbereich der Detektionseinrichtung, insbesondere ein Sensor, eine konstante Position und Orientierung innerhalb der Küchenmaschine auf und kann somit besonders einfach eine Positionsveränderung des Verriegelungshebels detektierten.

Alternativ könnte es jedoch auch vorgesehen sein, dass die Detektionseinrichtung vollständig an der Verriegelungseinrichtung angeordnet ist, wobei beispielsweise der Sensor an dem Verriegelungsgestänge angeordnet ist, welches die Bewegung des Aktuators auf den Verriegelungshebel überträgt, während der von dem Sensor detektierte Teilbereich ein Teilbereich des Verriegelungshebels ist. Gemäß dieser Ausgestaltung kann der Sensor so angeordnet sein, dass er abhängig von einer bestimmten Winkelstellung des Verriegelungshebels und des Verriegelungsgestänges zueinander ein Fehlen des Sicherungselementes erkennt, beispielsweise weil der Verriegelungshebel und das Gestänge eine solche relative Position zueinander aufweisen, welche im ordnungsgemäß montierten Zustand des Sicherungselementes nicht auftreten könnte.

Es wird vorgeschlagen, dass die Detektionseinrichtung einen akustischen und/ oder optischen Sensor aufweist, insbesondere einen CCD-Chip oder einen CMOS-Chip. Der akustische Sensor kann beispielsweise ein Ultraschallsensor sein, welcher die An- oder Abwesenheit eines zu detektierenden Teilbereiches des Verriegelungshebels erkennen kann. Der akustische Sensor erzeugt ein elektromagnetisches Feld (beispielsweise Ultraschallfeld), das in Abhängigkeit von der aktuellen Position des Verriegelungshebels beeinflusst wird. Die optischen Sensoren können beispielsweise übliche Kamerachips, wie beispielsweise CCD-Chips oder CMOS-Chips sein, oder auch Fotodioden. Bei Verwendung eines solchen Sensors kann die Position des Verriegelungshebels beispielsweise dadurch erkannt werden, dass das Licht einer LED auf den optischen Sensor trifft. Sofern das von der Lichtquelle emittierte Licht von dem Sensor detektiert werden kann, weist der Verriegelungshebel eine Position auf, welche nur bei ordnungsgemäßer Montage des Sicherungselementes auftreten kann. Alternativ kann die Detektionseinrichtung so ausgestaltet sein, dass der Sensor das Licht nur dann empfangen kann, wenn das Sicherungselement nicht ordnungsgemäß oder gar nicht montiert ist.

Es empfiehlt sich insbesondere, dass die Detektionseinrichtung eine Lichtschrankenanordnung aufweist. Die Lichtschrankenanordnung kann beispielsweise als eine Einweglichtschranke oder alternativ als Reflexlichtschranke ausgebildet sein. Im Falle der Einweglichtschranke können beispielsweise an in Strahlrichtung gegenüberliegenden Teilen des Gehäuses der Küchenmaschine ein optischer Sensor und eine dazu korrespondierende Lichtquelle angeordnet sein. Bei einer korrekten Installation des Sicherungselementes an der Verriegelungseinrichtung gelangt ein Hebelteilbereich des Verriegelungshebels in der Verriegelungsstellung der Verriegelungseinrichtung in den Detektionsbereich der Lichtschranke, so dass die von der Lichtquelle emittierte Strahlung unterbrochen wird und nicht von dem optischen Sensor detektiert werden kann. Ein fehlendes Sensorsignal gibt somit Aufschluss über die Position des Verriegelungshebels und somit gleichzeitig auch über die ordnungsgemäße Montage des Sicherungselementes innerhalb der Verriegelungseinrichtung. Sofern das Sicherungselement nicht korrekt oder gar nicht montiert ist, kann der zu detektierende Hebelteilbereich über seine eigentliche Endposition für die Verriegelungsstellung hinausschwenken, so dass der optische Sensor in Bezug auf die vermeintliche Verriegelungsstellung weiterhin Licht detektiert. Sofern die Lichtschranke nicht wie zuvor erläutert als Einweglichtschranke ausgebildet ist, sondern stattdessen als Reflektionslichtschranke, sind die Lichtquelle und der optische Sensor beispielsweise an dem gleichen Teilbereich des Gehäuses der Küchenmaschine angeordnet. Ein Hebelteilbereich des Verriegelungshebels dient in diesem Fall als korrespondierende Fläche der Detektionseinrichtung, welche bei einer Bewegung des Verriegelungshebels durch den Lichtweg der Lichtschranke die Lichtstrahlung zurück an den optischen Sensor reflektiert. Sofern das Sicherungselement falsch oder gar nicht montiert ist, gelangt der korrespondierende Hebelteilbereich nicht in den Lichtweg der Lichtschranke, so dass der optische Sensor keine Lichtreflektion detektieren kann.

Alternativ zu den zuvor dargestellten Detektionsanordnungen sind auch andere Anordnungen denkbar, beispielsweise solche Anordnungen, bei welchen ein akustischer oder optischer Sensor an den beweglichen Teilbereichen der Verriegelungseinrichtung angeordnet ist, während der akustische Sensor oder der optische Sensor an einem ortsfesten Teilbereich des Gehäuses der Küchenmaschine angeordnet ist. Der Sensor muss auch nicht zwangsläufig unmittelbar an dem Verriegelungshebel angeordnet sein. Vielmehr kann dieser auch an weiteren Teilbereichen der Verriegelungseinrichtung angeordnet sein, welche einen Rückschluss auf die aktuelle Position des Verriegelungshebels zulassen. Beispielsweise können diese Teilbereiche auch Teilbereiche des Verriegelungsgestänges sein, sofern dieser Teilbereich in dem Falle, dass das Sicherungselement nicht ordnungsgemäß oder gar nicht montiert ist eine andere Stellung einnimmt als im dem Fall, dass eine ordnungsgemäße Montage vorliegt. Somit können auch über die Detektion der Position eines weiteren Teilbereiches der Verriegelungseinrichtung Rückschlüsse auf die aktuelle Position des Verriegelungshebels getroffen werden, so dass die Detektionseinrichtung auch in diesen Fällen so eingerichtet ist, dass sie eine Position des Verriegelungshebels erkennen kann.

Es wird des Weiteren vorgeschlagen, dass die Küchenmaschine eine Steuereinheit aufweist, welche eingerichtet ist, die Inbetriebnahme der Küchenmaschine in Abhängigkeit von dem Messsignal der Detektionseinrichtung zu sperren oder freizugeben. Die Küchenmaschine ist somit mit einer Sicherheitsfunktion ausgestattet, bei welcher ein falsch oder nicht montiertes Sicherungselement automatisch erkannt wird und die Küchenmaschine daraufhin nicht in Betrieb genommen werden kann. Die Steuereinheit ist dazu mit der Detektionseinrichtung verbunden, so dass diese von der Detektionseinrichtung eine Information darüber erhält, ob das Sicherungselement ordnungsgemäß montiert ist oder nicht. Sofern die Detektionseinrichtung erkannt hat, dass das Sicherungselement nicht ordnungsgemäß montiert ist, kann die Küchenmaschine beispielsweise nicht gestartet werden. Dazu sperrt die Steuereinheit beispielsweise die Inbetriebnahme eines Motors, welcher ein Rührwerk antreibt, eine Heizeinrichtung oder ähnliches.

Es wird vorgeschlagen, dass das Sicherungselement eine Schraube ist. Eine solche Schraube wird zur drehfesten Verbindung von Verriegelungselement und Verriegelungshebel beispielsweise in korrespondierend ausgebildete Durchgangslöcher sowohl an dem Verriegelungselement als auch dem Verriegelungshebel verschraubt. Statt einer Schraube kann beispielsweise auch ein zylindrischer oder kegeliger Stift verwendet werden oder ein Stopfenelement, welches in korrespondierende Bohrungen des Verriegelungselementes und des Verriegelungshebels eingedrückt wird. Das Material des Sicherungselementes ist vorteilhaft so gewählt, dass die Kraftübertragung von dem Verriegelungshebel auf das Verriegelungselement während der gesamten Lebensdauer der Küchenmaschine gewährleistet werden kann, ohne im Laufe der Zeit die drehfeste Verbindung zu lockern und somit die spielfreie Verbindung zu lösen.

Vorteilhaft weist die drehfeste Verbindung von Verriegelungselement und Verriegelungshebel zusätzlich zu dem Sicherungselement einen Bajonettverschluss auf, welcher mittels des Sicherungselementes an einer Öffnungsbewegung gehindert ist. Das Verriegelungselement und der Verriegelungshebel weisen entsprechend korrespondierende Verschlussteile eines Bajonettverschlusses auf, welche im verbundenen Zustand miteinander in Eingriff stehen. Der Bajonettverschluss wird vorteilhaft in eine Drehrichtung verschlossen, welche der Drehrichtung der Verriegelungselemente von der Entriegelungsstellung in die Verriegelungsstellung entspricht. Schließlich sind die korrespondierenden Flanken des Bajonettverschlusses an dem Verriegelungselement bzw. dem Verriegelungshebel relativ zu dem Sicherungselement so angeordnet, dass das Sicherungselement eine relative Bewegung des Verriegelungselementes und des Verriegelungshebels zueinander sperrt.

Schließlich wird mit der Erfindung vorgeschlagen, dass die Verbindung von Verriegelungselement und Verriegelungshebel bei Abwesenheit des Sicherungselementes mittels einer Betätigung der Verriegelungseinrichtung in Richtung der Verriegelungsstellung in eine Freigabestellung verlagerbar ist. Sofern beispielsweise zu Reparatur- oder Wartungszwecken eine Öffnung des Bajonettverschlusses erforderlich ist, kann das Sicherungselement entfernt werden und dann eine automatische Entbajonetttierung von Verriegelungselement und Verriegelungshebel durch Betätigung der Verriegelungsfunktion der Verriegelungselemente durchgeführt werden.

Im Folgenden wird die Erfindung anhand eines Ausführungsbeispiels näher erläutert. Es zeigen:
- Fig. 1: eine Küchenmaschine mit zwei Verriegelungselementen,
- Fig. 2: einen Teilbereich eines Gehäuses der Küchenmaschine mit einem Verriegelungselement vor der Montage,
- Fig. 3: das Verriegelungselement während einer Montage an einem Verriegelungshebel,
- Fig. 4: eine Schnittansicht eines mit einem Verriegelungselement verbundenen Verriegelungshebels vor dem Bajonetttieren,
- Fig. 5: eine Außenansicht der Darstellung gemäß Figur 4,
- Fig. 6: eine Außensicht des mit dem Verriegelungselement verbundenen Verriegelungshebels nach dem Bajonetttieren,
- Fig. 7: ein Sicherungselement während der Montage,
- Fig. 8: ein Sicherungselement nach der Montage,
- Fig. 9: eine Schnittansicht der Darstellung gemäß Figur 8,
- Fig. 10: eine Verriegelungseinrichtung mit ordnungsgemäß montiertem Sicherungselement in einer Öffnungsstellung,
- Fig. 11: eine Detailansicht der Verriegelungseinrichtung gemäß Figur 10,
- Fig. 12: die Verriegelungseinrichtung gemäß Figur 10 in einer Verriegelungsstellung,
- Fig. 13: eine Detailansicht der Verriegelungseinrichtung gemäß Figur 12,
- Fig. 14: eine Verriegelungseinrichtung ohne ein Sicherungselement in einer Verriegelungsstellung,

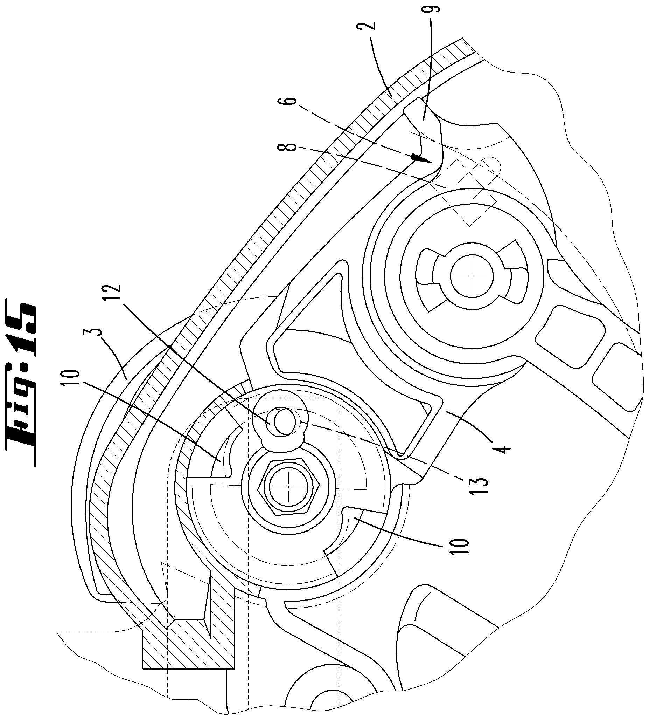

- Fig. 15: eine Detailansicht der Verriegelungseinrichtung gemäß Figur 14.

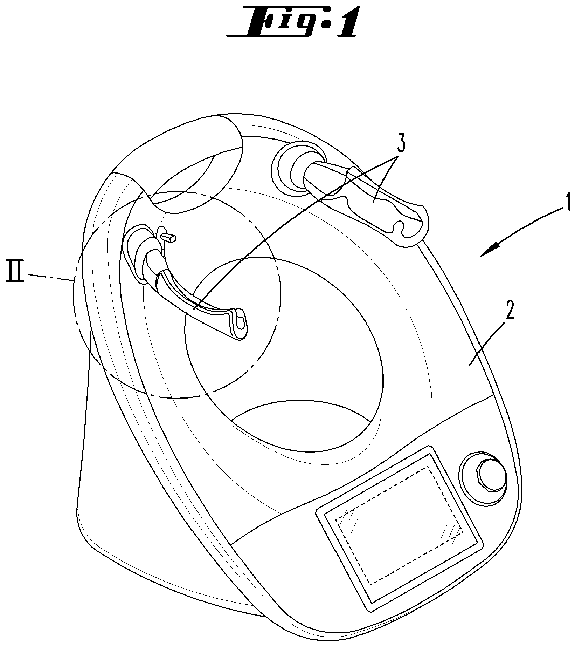

Die in Figur 1 dargestellte Küchenmaschine 1 weist ein Gehäuse 2 auf, in welches beispielsweise ein Mixgefäß (nicht dargestellt) eingesetzt werden kann. Das Mixgefäß kann gehäuseseitig mit einem Rührwerk verbunden sein. Die Küchenmaschine 1 weist darüber hinaus zwei Verriegelungselemente 3 als Teile einer Verriegelungseinrichtung auf. Die Verriegelungselemente 3 dienen dazu, das in das Gehäuse 2 der Küchenmaschine 1 einsetzbare Gefäß mit einem Deckel zu verriegeln. Die Verriegelungselemente 3 können von einer Öffnungsstellung in eine Verriegelungsstellung bewegt werden, hier insbesondere verschwenkt werden. Die Bewegung der Verriegelungselemente 3 kann automatisch mittels eines Elektromotors veranlasst werden.

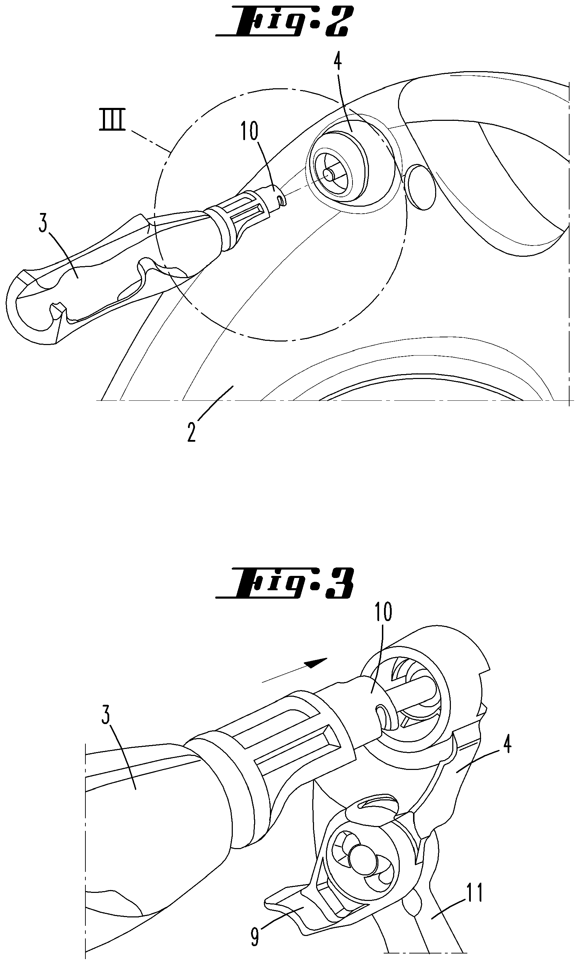

Figur 2 zeigt einen Ausschnitt des Gehäuses 2 der Küchenmaschine 1. Dort ragt ein Teilbereich eines Verriegelungshebels 4 aus dem Gehäuse 2 der Küchenmaschine 1 hervor. Dieser Teilbereich des Verriegelungshebels 4 dient zur Verbindung mit einem korrespondierenden Teilbereich des Verriegelungselementes 3. Beide Teilbereiche sind als korrespondierende Teile eines Bajonettverschlusses 10 ausgebildet.

Figur 3 zeigt den üblicherweise in dem Gehäuse 2 der Küchenmaschine 1 aufgenommenen Verriegelungshebel 4 der Verriegelungseinrichtung vor einer Verbindung mit dem Verriegelungselement 3. Das Verriegelungselement 3 und der Verriegelungshebel 4 weisen die korrespondierenden Teile des Bajonettverschlusses 10 auf. Der Verriegelungshebel 4 weist einen Hebelteilbereich 9 auf, der Teil einer Detektionseinrichtung 6 ist. An dem von dem Verriegelungselement 3 abgewandten Ende des Verriegelungshebels 4 ist ein Endbereich eines Verriegelungsgestänges 11 angeordnet, welches in Wirkverbindung mit einem Aktuator 5 steht (in Figur 3 nicht dargestellt).

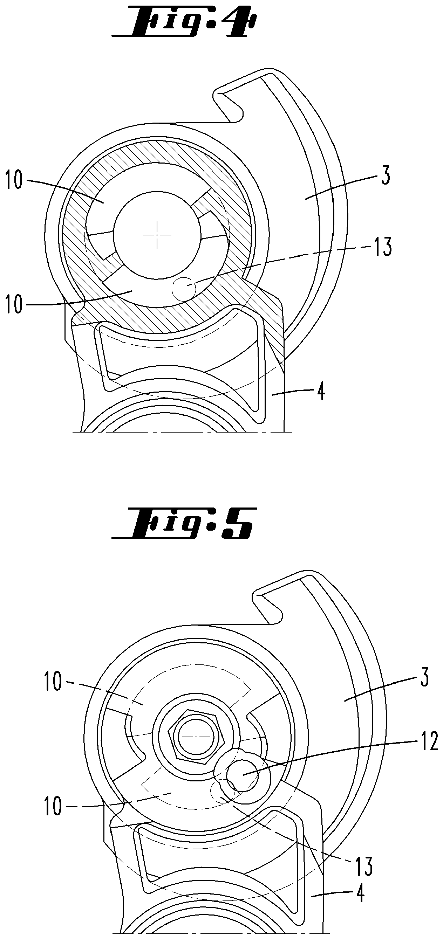

Figur 4 zeigt einen Schnitt des mit dem Verriegelungselement 3 verbundenen Verriegelungshebels 4 vor dem Bajonetttieren. Die korrespondierenden Teilbereiche, welche den Bajonettverschluss 10 bilden, sind noch nicht miteinander bajonetttiert. In dieser Schnittdarstellung ist darüber hinaus ein Loch 13 des Verriegelungselementes 3 erkennbar, in welches später ein Sicherungselement 7 eingebracht werden kann.

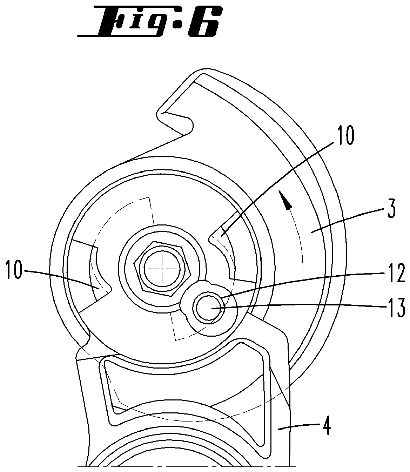

Figur 5 zeigt das Verriegelungselement 3 mit dem Verriegelungshebel 4 in einer Außenansicht, auf den Verriegelungshebel 4 geschaut. Der Verriegelungshebel 4 weist ein Loch 12 auf, welches in einem bajonetttierten Zustand von Verriegelungselement 3 und Verriegelungshebel 4 mit dem Loch 13 des Verriegelungselementes 3 korrespondiert. Hier ist der Bajonettverschluss 10 noch nicht in seiner verschlossenen Endstellung, so dass das Loch 13 des Verriegelungselementes und das Loch 12 des Verriegelungshebels 4 noch nicht übereinander liegen, sondern durch einen Drehwinkel zueinander verschwenkt sind. Figur 6 zeigt das Verriegelungselement 3 und den Verriegelungshebel 4 nach dem Bajonetttieren. Der Bajonettverschluss 10 befindet sich in seiner verschlossenen Endstellung. Gemäß dieser Stellung liegen das Loch 12 des Verriegelungshebels 4 und das Loch 13 des Verriegelungselementes 3 übereinander.

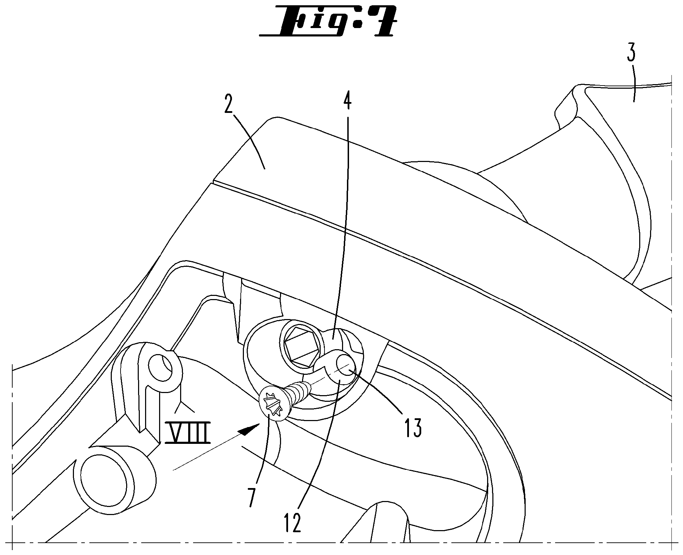

Figur 7 zeigt einen Teilbereich des Gehäuses 2 der Küchenmaschine 1 während der Montage eines Sicherungselementes 7 an dem Verriegelungshebel 4 und dem Verriegelungselement 3. Gemäß dieser Darstellung ist der Bajonettverschluss 10 des Verriegelungselementes 3 und des Verriegelungshebels 4 verschlossen, so dass das Loch 12 des Verriegelungshebels 4 und das Loch 13 des Verriegelungselementes 3 koaxial übereinander liegen. Wie in der Figur dargestellt kann das Sicherungselement 7 in die Löcher 12, 13 eingeschoben werden, um den Bajonettverschluss 10 drehfest zu sichern.

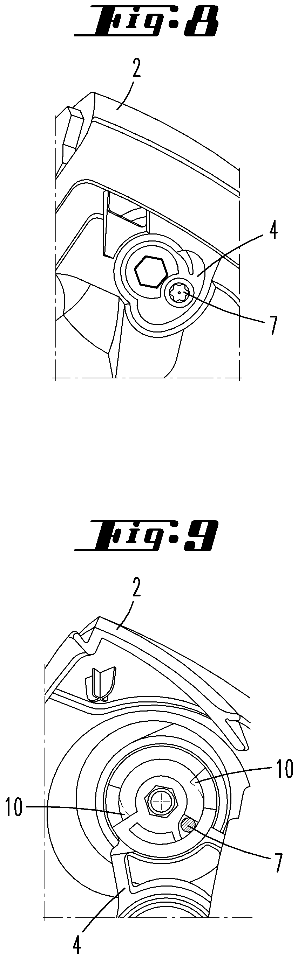

Figur 8 zeigt das Sicherungselement 7 nach der Montage an dem Verriegelungselement 3 und dem Verriegelungshebel 4.

Figur 9 zeigt die entsprechende Schnittansicht des Verriegelungselementes 3 und des Verriegelungshebels 4, wobei das Sicherungselement 7 den Bajonettverschluss 10 sichert.

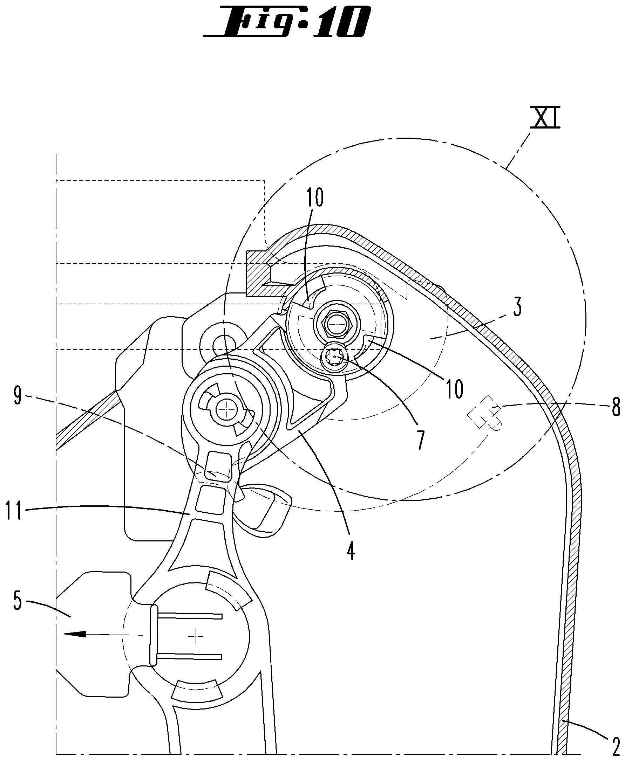

Figur 10 zeigt einen Teilbereich des Gehäuses 2 der Küchenmaschine 1, der die Verriegelungseinrichtung und eine der Verriegelungseinrichtung zugeordnete Detektionseinrichtung 6 aufweist. Die Verriegelungseinrichtung besteht hier aus dem Verriegelungselement 3, dem damit über den Bajonettverschluss 10 und das Sicherungselement 7 verbundenen Verriegelungshebel 4, einem mit dem Verriegelungshebel 4 verbundenen Verriegelungsgestänge 11 sowie einem mit dem Verriegelungsgestänge 11 in Wirkverbindung stehenden Aktuator 5. Der Verriegelungshebel 4 weist den Hebelteilbereich 9 auf, welcher Teil der Detektionseinrichtung 6 ist. Die Detektionseinrichtung 6 weist neben dem Hebelteilbereich 9 einen Sensor 8 auf, welcher ausgebildet ist, die Position des Verriegelungshebels 4, insbesondere des Hebelteilbereiches 9 zu detektieren. In der gezeigten Darstellung befindet sich die Verriegelungseinrichtung in der Öffnungsstellung. Dabei ist das Verriegelungselement 3 nicht mehr in Kontakt mit einem in dem Gehäuse 2 der Küchenmaschine 1 angeordneten Gefäß mit Deckel. In der gezeigten Öffnungsstellung ist der Hebelteilbereich 9 vollständig aus dem Detektionsbereich des Sensors 8 herausgeschwenkt.

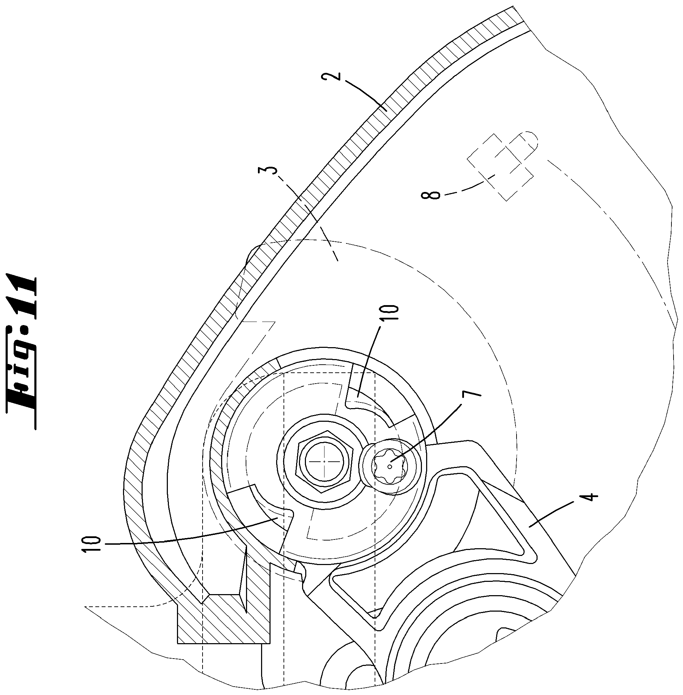

Figur 11 zeigt eine Detailansicht der in Figur 10 gezeigten Darstellung.

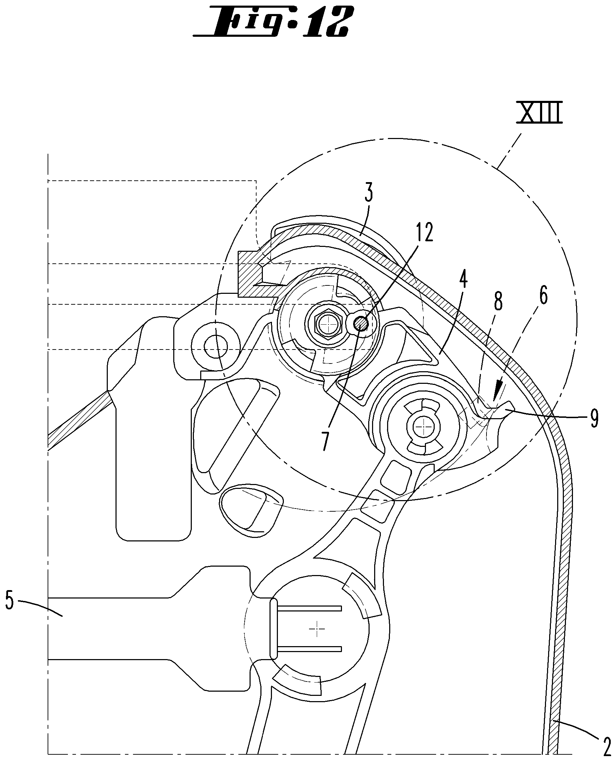

Figur 12 zeigt die Verriegelungseinrichtung mit ordnungsgemäß montiertem Sicherungselement 7 in einer Verriegelungsstellung. Dabei ist der Aktuator 5 vollständig in die Verriegelungsstellung verfahren, zu welchem Zweck das Verriegelungsgestänge 11 so betätigt wurde, dass der Verriegelungshebel 4 in die Verriegelungsstellung geschwenkt ist. Durch die ordnungsgemäße Montage des Sicherungselementes 7 sind das Verriegelungselement 3 und der Verriegelungshebel 4 so miteinander verbunden, dass der Hebelteilbereich 9 des Verriegelungshebels 4 in der Verriegelungsstellung in den Detektionsbereich des Sensors 8 eingeschwenkt ist. Der Sensor 8 ist hier beispielsweise ein Ultraschallsensor, welcher ein elektromagnetisches Feld erzeugt, das bei Anwesenheit des Hebelteilbereiches 9 in dessen Detektionsbereich verändert wird. Diese Veränderung kann durch den Sensor 8 detektiert werden und zur Auswertung an eine Auswerteeinrichtung (nicht dargestellt) weitergeleitet werden.

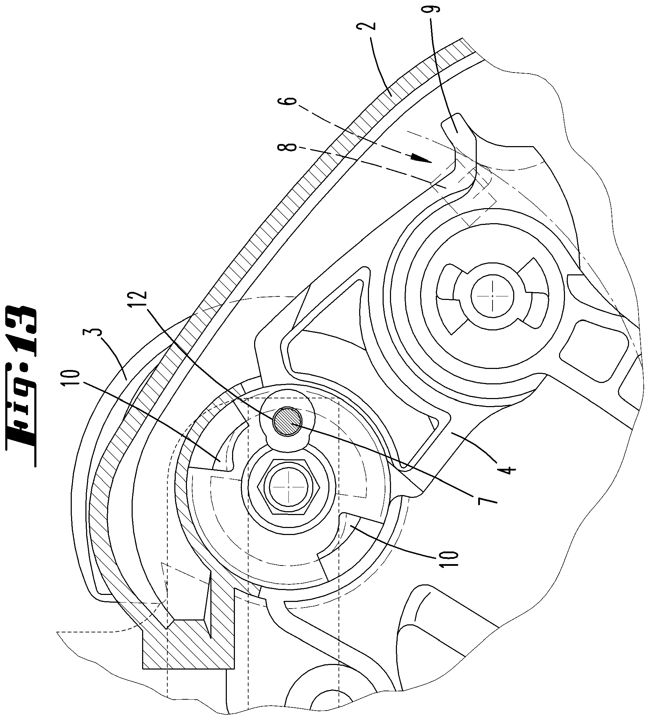

Figur 13 zeigt die Verriegelungsstellung gemäß Figur 12 in einer Detailansicht.

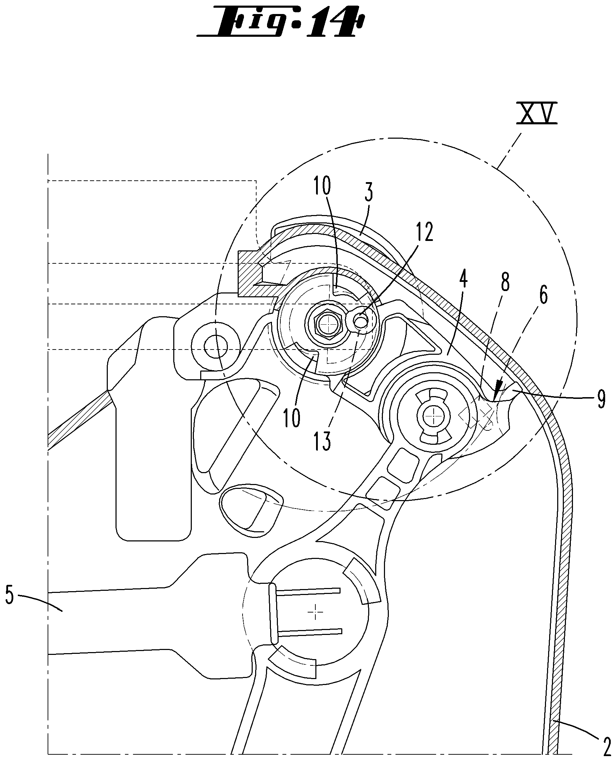

In Figur 14 ist eine Situation dargestellt, in welcher kein Sicherungselement 7 in der Verriegelungseinrichtung montiert ist. Das Verriegelungselement 3 und der Verriegelungshebel 4 weisen somit ein Drehwinkelspiel zueinander auf. Bei einer Bewegung der Verriegelungseinrichtung von der Öffnungsstellung in die Verriegelungsstellung kann der Verriegelungshebel 4 durch die nicht drehfeste Verbindung von Verriegelungselement 3 und Verriegelungshebel 4 in eine Position verbracht werden, welche über die für die Verriegelungsstellung charakteristische Position des Verriegelungshebels 4 hinaus weist. Dadurch wird der Hebelteilbereich 9 des Verriegelungshebels 4 über den Detektionsbereich des Sensors 8 hinausgeschwenkt bis der Hebelteilbereich 9 nicht weiter verschwenkt werden kann, weil dieser wie hier dargestellt beispielsweise von innen gegen das Gehäuse 2 der Küchenmaschine 1 schlägt. Der Sensor 8 der Detektionseinrichtung 6 detektiert in diesem Fall zuerst ein Eintauchen des Hebelteilbereiches 9 in den Detektionsbereich und sodann ein Entfernen des Hebelteilbereiches 9 aus dem Detektionsbereich des Sensors 8, wobei das Entfernen in eine Verschwenkrichtung erfolgt, welche einer Fortsetzung der Bewegung von der Öffnungsstellung in die Verriegelungsstellung entspricht. Dadurch kann eine an die Detektionseinrichtung 6 angeschlossene Auswerteeinheit darauf schließen, dass der Verriegelungshebel 4 sich außerhalb der in Bezug auf die Verriegelungsstellung der Verriegelungseinrichtung ordnungsgemäßen Position befindet. Dies bedeutet gleichzeitig auch, dass das Verriegelungselement 3 und der Verriegelungshebel 4 unzulässig zueinander verdreht sind, was wiederum auf ein Fehlen des Sicherungselementes 7 schließen lässt. Um nun einen Betrieb der Küchenmaschine 1 in diesem nicht gewünschten Zustand zu verhindern, sendet die Auswerteeinheit eine Information an eine Steuereinheit der Küchenmaschine 1, welche die Inbetriebnahme der Küchenmaschine 1, insbesondere eines Motors der Küchenmaschine 1, sperrt. Bevor die Küchenmaschine 1 wieder freigegeben werden kann, muss das Sicherungselement 7 ordnungsgemäß montiert werden, d. h. das Verriegelungselement 3 und der Verriegelungshebel 4 müssen wieder drehfest miteinander verbunden werden.

Die zuvor erläuterte Verriegelungseinrichtung lässt sich im Falle eines notwendigen Austausches von Teilen der Verriegelungseinrichtung auch so nutzen, dass das Sicherungselement 7 manuell entfernt wird und sodann durch eine Betätigung der Verriegelungseinrichtung von der Öffnungsstellung in die Verriegelungsstellung ein Lösen des Bajonettverschlusses 10 erzwungen wird, so dass ein besonders einfaches Trennen von Verriegelungselement 3 und Verriegelungshebel 4 möglich ist. Dies wird dadurch ermöglicht, dass das Verriegelungselement 3 bei einem Anstoßen des Hebelteilbereiches 9 an eine Endposition, beispielsweise an das Gehäuse 2, entgegen der Verschlussrichtung des Bajonettverschlusses 10, bewegt wird.

### Bezugszeichenliste

- 1: Küchenmaschine
- 2: Gehäuse
- 3: Verriegelungselement
- 4: Verriegelungshebel
- 5: Aktuator
- 6: Detektionseinrichtung
- 7: Sicherungselement
- 8: Sensor
- 9: Hebelteilbereich
- 10: Bajonettverschluss
- 11: Verriegelungsgestänge
- 12: Loch
- 13: Loch

## Patentansprüche

1. Küchenmaschine (1) mit einem Gehäuse (2), an welchem ein Gefäß anordenbar ist, wobei das Gehäuse (2) eine Verriegelungseinrichtung zur Verriegelung des Gefäßes mit einem Deckel aufweist, wobei die Verriegelungseinrichtung mindestens ein verschwenkbares Verriegelungselement (3), einen mit dem Verriegelungselement (3) drehfest verbindbaren Verriegelungshebel (4) sowie einen Aktuator (5) aufweist, wobei der Verriegelungshebel (4) und der Aktuator (5) so in Wirkverbindung stehen, dass der Verriegelungshebel (4) infolge einer Betätigung des Aktuators (5) von einer Öffnungsstellung in eine Verriegelungsstellung, und umgekehrt, verschwenkbar ist, wobei weiter der Verriegelungseinrichtung eine Detektionseinrichtung (6) zugeordnet ist, welche eingerichtet ist, eine Position des Verriegelungshebels (4) zu erkennen und dass die Detektionseinrichtung (6) zumindest teilweise an dem Gehäuse (2) angeordnet ist, **dadurch gekennzeichnet, dass** die Detektionseinrichtung dem Verriegelungshebel (4) selbst zugeordnet ist, so dass dessen Position unmittelbar detektiert werden kann oder dass an einem von dem Verriegelungselement (3) abgewandten Ende des Verriegelungshebels (4) ein Endbereich eines Verriegelungsgestänges (11) angeordnet ist, welches in Wirkverbindung mit dem Aktuator (5) steht und dass die Detektionseinrichtung (6) dem Verriegelungsgestänge (11) zugeordnet ist, welches derart eingerichtet ist, dass aus der Position des Verriegelungsgestänges (11) ein Rückschluss auf die Position des Verriegelungshebels (4) gezogen werden kann.

2. Küchenmaschine (1) nach Anspruch 1, **dadurch gekennzeichnet, dass** die Detektionseinrichtung einen Sensor aufweist und dass der Sensor eine konstante Position und Orientierung innerhalb der Küchenmaschine aufweist.

3. Küchenmaschine (1) nach Anspruch 1 oder 2, **dadurch gekennzeichnet, dass** der Verriegelungshebel (4) verschwenkbar ist.

4. Küchenmaschine (1) nach einem der vorhergehenden Ansprüche, **dadurch gekennzeichnet, dass** das Verriegelungselement (3) und der Verriegelungshebel (4) korrespondierende Teile eines Bajonettverschlusses (10) aufweisen.

5. Küchenmaschine nach einem der vorhergehenden Ansprüche, **dadurch gekennzeichnet, dass** ein Hebelteilbereich (9) des Verriegelungshebels (4) Teil der Detektionseinrichtung (6) ist.

6. Küchenmaschine (1) nach einem der vorhergehenden Ansprüche, **dadurch gekennzeichnet, dass** die Detektionseinrichtung (6) einen akustischen und/oder optischen Sensor (8), insbesondere einen CCD-Chip oder CMOS-Chip, aufweist.

7. Küchenmaschine (1) nach einem der vorhergehenden Ansprüche, **dadurch gekennzeichnet, dass** die Detektionseinrichtung (6) eine Lichtschrankenanordnung aufweist.

8. Küchenmaschine (1) nach einem der Ansprüche 5 bis 7, **dadurch gekennzeichnet, dass** der Hebelteilbereich (9) in Folge einer Bewegung der Verriegelungseinrichtung in die Verriegelungsstellung in den Detektionsbereich der Detektionseinrichtung (6) bewegbar ist.

9. Küchenmaschine (1) nach einem der vorhergehenden Ansprüche, **gekennzeichnet durch** eine Steuereinheit, welche eingerichtet ist, die Inbetriebnahme der Küchenmaschine (1) in Abhängigkeit von einem Messsignal der Detektionseinrichtung (6) zu sperren oder freizugeben.

10. Küchenmaschine (1) nach einem der Ansprüche 4 bis 9, **dadurch gekennzeichnet, dass** der Bajonettverschluss (10) mittels eines Sicherungselementes (7) an einer Öffnungsbewegung gehindert ist.

11. Küchenmaschine (1) nach einem der vorhergehenden Ansprüche, **dadurch gekennzeichnet, dass** das Verriegelungselement (3) und der Verriegelungshebel (4) durch Verdrehung zueinander in eine Formschlussstellung versetzbar sind und dass die Formschlussstellung durch das gesondert einzusetzende Sicherungselement (7), das im Kraftfluss der von dem Aktuator (5) aufgebrachten Verriegelungskraft liegt, festsetzbar ist.

12. Küchenmaschine (1) nach Anspruch 11, **dadurch gekennzeichnet, dass** die Verbindung von Verriegelungselement (3) und Verriegelungshebel (4) bei Abwesenheit des Sicherungselementes (7) mittels einer Betätigung der Verriegelungseinrichtung in Richtung der Verriegelungsstellung in eine Freigabestellung bewegbar ist.

13. Küchenmaschine (1) nach einem der Ansprüche 11 oder 12, **dadurch gekennzeichnet, dass** das Sicherungselement (7) eine Schraube ist.

## Claims

1. Kitchen appliance (1) comprising a housing (2) on which a vessel can be arranged, the housing (2) having a locking device for locking the vessel to a lid, the locking device having at least one pivotable locking element (3), a locking lever (4) which can be connected to the locking element (3) for conjoint rotation, and an actuator (5), the locking lever (4) and the actuator (5) being operatively connected such that the locking lever (4) can be pivoted from an open position into a locking position, and vice versa, as a result of an actuation of the actuator (5), a detection device (6) being assigned to the locking device, which detection device is designed to recognise a position of the locking lever (4), and such that the detection device (6) is arranged at least partially on the housing (2), **characterised in that** the detection device is itself assigned to the locking lever (4), so that the position of said locking lever can be detected directly, or **in that** an end region of a locking linkage (11) which is operatively connected to the actuator (5) is arranged at an end of the locking lever (4) that faces away from the locking element (3), and **in that** the detection device (6) is assigned to the locking linkage (11), which is designed in such a way that a conclusion can be drawn about the position of the locking lever (4) from the position of the locking linkage (11).

2. Kitchen appliance (1) according to claim 1, **characterised in that** the detection device has a sensor and **in that** the sensor has a constant position and orientation within the kitchen appliance.

3. Kitchen appliance (1) according to either claim 1 or claim 2, **characterised in that** the locking lever (4) is pivotable.

4. Kitchen appliance (1) according to any of the preceding claims, **characterised in that** the locking element (3) and the locking lever (4) have corresponding parts of a bayonet fastener (10).

5. Kitchen appliance according to any of the preceding claims, **characterised in that** a lever portion (9) of the locking lever (4) is part of the detection device (6).

6. Kitchen appliance (1) according to any of the preceding claims, **characterised in that** the detection device (6) has an acoustic and/or optical sensor (8), in particular a CCD chip or CMOS chip.

7. Kitchen appliance (1) according to any of the preceding claims, **characterised in that** the detection device (6) has a photoelectric sensor arrangement.

8. Kitchen appliance (1) according to any of claims 5 to 7, **characterised in that** the lever portion (9) can be moved into the detection range of the detection device (6) as a result of a movement of the locking device into the locking position.

9. Kitchen appliance (1) according to any of the preceding claims, **characterised by** a control unit which is designed to block or to allow the start-up of the kitchen appliance (1) depending on a measurement signal of the detection device (6).

10. Kitchen appliance (1) according to any of claims 4 to 9, **characterised in that** an opening movement of the bayonet lock (10) is prevented by means of a securing element (7).

11. Kitchen appliance (1) according to any of the preceding claims, **characterised in that** the locking element (3) and the locking lever (4) can be moved into a form-fitting position by rotation relative to one another, and **in that** the form-fitting position can be fixed by the securing element (7) which is to be inserted separately and which is in the force flow of the locking force applied by the actuator (5).

12. Kitchen appliance (1) according to claim 11, **characterised in that**, in the absence of the securing element (7), the connection between the locking element (3) and the locking lever (4) can be moved into a release position by means of an actuation of the locking device in the direction of the locking position.

13. Kitchen appliance (1) according to either claim 11 or claim 12, **characterised in that** the securing element (7) is a screw.

## Revendications

1. Robot ménager (1) avec un boîtier (2) auquel un récipient peut être agencé, dans lequel le boîtier (2) comprend un dispositif de verrouillage pour verrouillage du récipient avec un couvercle, dans lequel le dispositif de verrouillage comprend au moins un élément de verrouillage (3) pivotant, un levier de verrouillage (4) qui peut être relié de manière solidaire en rotation à l'élément de verrouillage (3) ainsi qu'un actionneur (5), dans lequel le levier de verrouillage (4) et l'actionneur (5) sont reliés activement de manière à ce que le levier de verrouillage (4) peut être pivoté d'une position d'ouverture à une position de verrouillage, et vice versa, suite à l'actionnement de l'actionneur (5), dans lequel en outre un dispositif de détection (6) est associé au dispositif de verrouillage, le dispositif de détection étant agencé pour détecter une position du levier de verrouillage (4), et le dispositif de détection (6) est au moins partiellement agencé sur le boîtier (2), **caractérisé en ce que** le dispositif de détection est associé au levier de verrouillage (4) lui-même, de sorte que sa position peut être détectée directement ou **en ce qu'**une zone d'extrémité d'une tringlerie de verrouillage (11) est agencée à une extrémité du levier de verrouillage (4) opposée à l'élément de verrouillage (3), laquelle zone d'extrémité est en liaison active avec l'actionneur (5), et le dispositif de détection (6) étant associé à la tringlerie de verrouillage (11), qui est conçue de telle sorte que l'on peut déduire de la position de la tringlerie de verrouillage (11) la position du levier de verrouillage (4).

2. Robot ménager (1) selon la revendication 1, **caractérisé en ce que** le dispositif de détection comprend un capteur et que le capteur a une orientation et une position constantes dans le robot ménager.

3. Robot ménager (1) selon la revendication 1 ou 2, **caractérisé en ce que** le levier de verrouillage (4) est pivotant.

4. Robot ménager (1) selon l'une quelconque des revendications précédentes, **caractérisé en ce que** l'élément de verrouillage (3) et le levier de verrouillage (4) ont des parties correspondantes d'un verrouillage à baïonnette (10).

5. Robot ménager selon l'une quelconque des revendications précédentes, **caractérisé en ce qu'**une partie de levier (9) du levier de verrouillage (4) fait partie du dispositif de détection (6).

6. Robot ménager (1) selon l'une quelconque des revendications précédentes, **caractérisé en ce que** le dispositif de détection (6) comprend un capteur acoustique et/ou optique (8), en particulier une puce CCD ou une puce CMOS.

7. Robot ménager (1) selon l'une quelconque des revendications précédentes, **caractérisé en ce que** le dispositif de détection (6) comprend un agencement de barrière lumineuse.

8. Robot ménager (1) selon l'une quelconque des revendications 5 à 7, **caractérisé en ce que** la partie de levier (9) peut être déplacée dans la zone de détection du dispositif de détection (6) à la suite d'un mouvement du dispositif de verrouillage dans la position de verrouillage.

9. Robot ménager (1) selon l'une quelconque des revendications précédentes, **caractérisé par** une unité de commande qui est agencée pour bloquer ou libérer le démarrage du robot ménager (1) en fonction d'un signal de mesure du dispositif de détection (6).

10. Robot ménager (1) selon l'une quelconque des revendications 4 à 9, **caractérisé en ce qu'** 'un élément de sécurité (7) empêche un mouvement d'ouverture de la serrure à baïonnette (10).

11. Robot ménager (1) selon l'une quelconque des revendications précédentes, **caractérisé en ce que** l'élément de verrouillage (3) et le levier de verrouillage (4) peuvent être amenés par rotation dans une position d'engagement positif l'un par rapport à l'autre, et **en ce que** la position d'engagement positif peut être fixée par l'élément de sécurité (7) à insérer séparément et qui se trouve dans le flux de force de la force de verrouillage appliquée par l'actionneur (5).

12. Robot ménager (1) selon la revendication 11, **caractérisé en ce que** la liaison entre l'élément de verrouillage (3) et le levier de verrouillage (4) peut être amenée dans une position de libération par un actionnement du dispositif de verrouillage en direction de la position de verrouillage en l'absence de l'élément de sécurité (7) .

13. Robot ménager (1) selon l'une des revendications 11 ou 12, **caractérisé en ce que** l'élément de sécurité (7) est une vis.
